# EUROPÄISCHE PATENTANMELDUNG

(11) **EP 3 893 364 A1**
(43) Veröffentlichungstag der Anmeldung: **13.10.2021**
(21) Anmeldenummer: 20168159.0
(22) Anmeldetag: 06.04.2020
(51) Int. Cl.: H02K 3/50, H02K 7/18

(54) **HALTESYSTEM FÜR STROMSCHIENEN AN STATOREN BZW. STATORSEGMENTEN DYNAMOELEKTRISCHER MASCHINEN**

(71) Anmelder: Siemens Aktiengesellschaft, 80333 München (DE)
(72) Erfinder: BRENNER, Robin, 94148 Kirchham (DE); DEUTSCH, Artur, 94086 Bad Griesbach i. Rottal (DE); KOESZEGI, Attila, 24420 Kanjiza (RS); LINDMEIER, Andreas, 94099 Ruhstorf (DE); RATZISBERGER, Dominik, 94149 Kößlarn (DE); SCHOBER, Frans Xaver Michael, 94154 Neukirchen vorm Wald (DE); WEGER, Michael, 94149 Kößlarn (DE); SCHÖNBAUER, Norbert, 94072 Bad Füssing (DE)
(74) Vertreter: Michalski Hüttermann & Partner Patentanwälte mbB

(57) **Zusammenfassung**

Die Erfindung betrifft ein Haltesystem (1) von Stromschienen (7) mit folgenden Elementen:
einem Grundelement (2), das an einer Stirnseite eines Stators (22) oder Statorsegments (13) einer dynamoelektrischen Maschine (24) befestigbar ist und einer vorgegebenen Anzahl von Fixierelementen (3) mittels derer die Stromschienen (7) am Grundelement (1) fixierbar sind.

## Beschreibung

Haltesystem für Stromschienen an Statoren bzw. Statorsegmenten dynamoelektrischer Maschinen

Die Erfindung betrifft ein Haltesystem für Stromschienen an Statoren bzw. Statorsegmenten dynamoelektrischer Maschinen, insbesondere Windkraftgeneratoren, als auch einen derartigen Stator einer dynamoelektrischen Maschine und eine Windkraftanlage.

Spulen, insbesondere größerer dynamoelektrischer Maschinen werden in Spulengruppen oder Spulensystemen elektrisch zusammengefasst. Dazu wurden in der Regel Stromschienen benötigt, welche bei erhöhtem Eigengewicht nicht mehr direkt an den Wickelköpfen befestigt werden können. Bei Windkraftanlagen, speziell bei direkt angetriebenen Windkraftgeneratoren, werden üblicherweise massive Stromschienen verwendet, die die Eigengewichtsproblematik zusätzlich erhöhen.

Derartige Stromschienen eines direkt angetriebenen Windkraftgenerators, der segmentiert aufgebaut ist, sind beispielsweise aus der WO 2019/185224 A1 bekannt.

Ausgehend davon liegt der Erfindung die Aufgabe zugrunde, ein Haltesystem zu schaffen, das für Stromschienen einer dynamoelektrischen Maschine, insbesondere für einen direkt angetriebenen Generator einer Windkraftanlage geeignet ist. Dabei soll vor allem die erforderliche Isolationsfestigkeit/Isolationsabstände dieser Stromschienen innerhalb dieses Haltesystems eingehalten werden, als auch für eine ausreichende Kühlmöglichkeit für die Stromschienen und die dynamoelektrische Maschine gesorgt werden. Des Weiteren soll das Haltesystem möglichst in den Aufbau der dynamoelektrischen Maschine integriert sein, um einen kompakten Generator in einer Gondel einer Windkraftanlage bereitzustellen.

Die Lösung der gestellten Aufgabe gelingt durch ein Haltesystem von Stromschienen mit folgenden Elementen: einem Grundelement an einer Stirnseite eines Stators oder Statorsegments einer dynamoelektrischen Maschine befestigbar und einer vorgegebenen Anzahl von Fixierelementen mittels derer die Stromschienen am Grundelement fixierbar sind.

Die Lösung der gestellten Aufgabe gelingt ebenso durch einen Stator bzw. Statorsegment einer dynamoelektrischen Maschine,
- wobei dort im Wesentlichen axial verlaufenden Nuten eines Blechpaketes ein Wicklungssystem vorgesehen ist, dass an den Stirnseiten Wickelköpfe ausbildet,
- wobei das Blechpaket auf einem Trägersystem angeordnet ist, das Druckplatten im Bereich der Stirnseite aufweist, die mittels Verbindungselemente fixiert sind,
- wobei ein Haltesystem von Stromschienen nach Anspruch 1 vorgesehen ist, das mit einem Grundelement an einer Stirnseite eines Stators oder Statorsegments der dynamoelektrischen Maschine befestigbar ist und Stromschienen mittels einer vorgegebenen Anzahl von Fixierelementen am Grundelement fixierbar sind.

Die Lösung der gestellten Aufgabe gelingt ebenso durch einen Generator einer Windkraftanlage mit Stator oder Statorsegment.

Die Lösung der gestellten Aufgabe gelingt ebenso durch eine Windkraftanlage mit einem Generator.

Durch das erfindungsgemäße Haltesystem, dass insbesondere durch Stahl realisiert ist, können nun befestigungsrelevante belastbare Bohrungen direkt in die Grundelemente und Fixierelemente eingebracht werden. Zusätzliche Fixierkomponenten können dabei entfallen und der Montageaufwand wird dabei wesentlich vereinfacht. Dadurch erhöht sich die Steifigkeit des Haltesystems, insbesondere seiner Komponenten wie Grundelement und Fixierelementen, so dass die gesamten Anschlussflächen für Stromschienen schwingungsärmer sind.

Der Verlauf der Stromschienen an der Stirnseite des Stators bzw. Statorsegments kann damit auch hinsichtlich der erforderlichen Isolationsstrecken optimiert werden, so dass eine optimierte Ausführung der Dimensionen des Haltesystems der Belüftung des Wickelkopfes des Stators zu Gute kommt.

Die Anordnung der Stromschienen stellen die jeweilige Zuleitung zu einer Phase einer Spulengruppe des Wicklungssystems der dynamoelektrischen Maschine, insbesondere des Generators dar.

Eine elektrische Kontaktierung der Stromschienen in Umfangsrichtung kann durch Zusammenstecken, verschweißen, Litzenverbindungen erfolgen.

Um eine weitere Gewichtsreduzierung der Stromschienen zu erhalten, können diese bezüglich ihres Querschnitts ausgehend vom Einspeisepunkt reduziert werden.

Am Haltesystem können ebenso in einfacher Art und Weise Datenleitungen mit verlegt werden, indem diese mit Kabelbinder am Haltesystem befestigt werden.

Das Haltesystem mit seinen Stromschienen, Sternpunktverbindungen, Erdungsleitungen und Datenleitungen ist im Wesentlichen radial unter dem Wickelkopf eines Statorsegments oder des Stators angeordnet. Dies führt zu einem kompakteren Aufbau. Dieser Aufbau ermöglicht auch die Einbindung der Stromschienen in eine eventuelle Kühlanordnung der Wickelköpfe.

Das Statorsegment mit funktionsfertigem Wicklungssystem, vormontierter Stromschienen am Statorsegment ermöglicht eine fast komplette werksseitige, und damit geprüfte Vormontage, die die anlagenseitige Montagezeit reduziert.

Mittels der Anordnung der Stromschienen an der Stirnseite des Stators lässt sich ein kompakter Aufbau der dynamoelektrischen Maschine, insbesondere eines Generators einer Windkraftanlage bereitstellen.

Damit ist ein kompakter Aufbau dieses Generators bei gleichzeitig ausreichender Belüftung seines Wicklungssystems und der Stromschienen möglich.

Die Erfindung sowie weitere vorteilhafte Ausgestaltungen der Erfindung werden anhand prinzipiell dargestellter Ausführungsbeispiele näher erläutert, darin zeigen:
- FIG 1: Elemente des Haltesystems,
- FIG 2: perspektivische Darstellung von Stromschienen im Haltesystem,
- FIG 3: Statorsegment
- FIG 4: prinzipieller Anordnung von Statorsegmenten,
- FIG 5: direkt angetriebener Generator,
- FIG 6: Windkraftanlage.

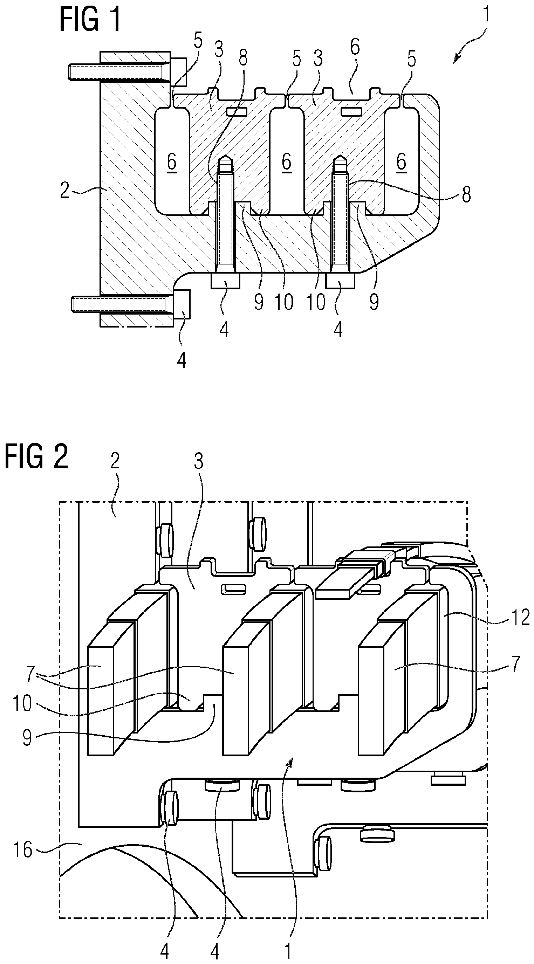

FIG 1 zeigt ein Haltesystem 1, das grundsätzlich aus einem Grundelement 2 und Fixierelementen 3 aus Stahl aufgebaut ist. Diese Grundelemente 2 sind im eingebauten Zustand mittels Schraubverbindungen 4 an einer Druckplatte 16 befestigt. Die Fixierelemente 3 sind im eingebauten Zustand am jeweiligen Grundelement 2 befestigt. Die Fixierelemente 3 weisen Füße 10 auf, um einen Nocken 9 des Grundelements 2 zu umfassen, wobei durch eine asymmetrisch angeordnete Bohrung 8 gewährleistet ist, dass eine Verwechslung der Einbaulage der Fixierelemente 3 ausgeschlossen ist.

Im zusammengebauten Zustand des Haltesystems 1 ergeben sich nunmehr Bauräume 6 für die Stromschienen 7, als auch gegebenenfalls für Sternpunktverbindungen oder Erdungsleitungen. Im zusammengebauten Zustand weist das Haltesystem 1 Öffnungen 5 auf. Damit werden bei bestromten Stromschienen 7 Wirbelströme unterdrückt, da keine geschlossenen metallischen Verbindungen zwischen den Einzelelementen vorhanden sind.

FIG 2 zeigt in einer teilperspektivischen Darstellung die Anordnung der Stromschienen 7 innerhalb des Haltesystems 1, wobei das Haltesystem 1 dabei an den Druckplatten 16 eines Stators 22 oder eines Statorsegments 13 angebracht ist. Im Bereich des Grundelements 2 und der Fixierelemente 3 weisen die Stromschienen 7 Isolationselemente 12 auf, die je nach anliegender Spannung unterschiedliche Dicken aufweisen.

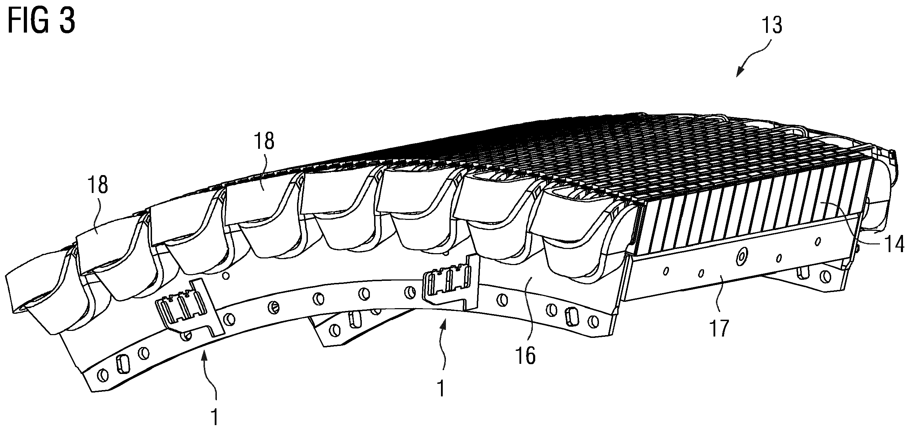

FIG 3 zeigt ein beispielhaftes Statorsegment 13 in perspektivische, aber nicht maßstäblicher Darstellung, mit Haltesystem 1, aber ohne Stromschienen 7, wobei das Blechpaket 14 in Axialrichtung aus Teilblechpaketen aufgebaut ist. Das Blechpaket 14 ist in axialer Richtung durch Druckplatten 16 begrenzt und fixiert, wobei Verbindungselemente 17 dabei die Druckplatten 16 an den Stirnseiten des Statorsegments 13 zusammenhalten. In nicht näher dargestellten Nuten des Blechpakets 14 sind Formspulen 18 angeordnet, deren Wickelköpfe unterschiedliche Kröpfungen aufweisen. Diesen Formspulen 18 wird nunmehr elektrische Energie bereitgestellt bzw. daraus abgeführt. Dies geschieht über die Stromschienen 7, die am Haltesystem 1 an der Stirnseite, insbesondere an den Druckplatten 16 positioniert werden.

Die Stromschienen 7 erstrecken sich dabei bei einem Statorsegment 13 über die gesamte umfängliche Breite, entspricht somit ungefähr der Länge der Druckplatte 16. Je nach Verbindungsart zu den umfänglich benachbarten Statorsegmenten können die Stromschienen 7, dabei länger oder kürzer sein.

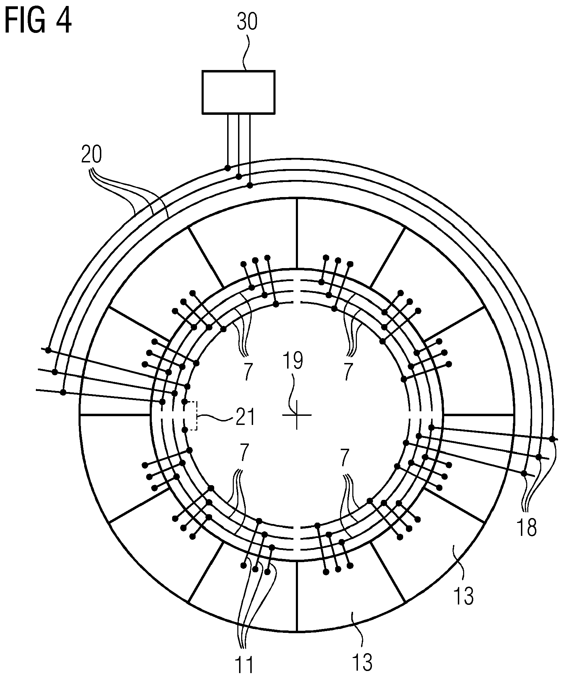

FIG 4 zeigt einer prinzipiellen Darstellung einen Stator 22 der aus Statorsegmenten 13 aufgebaut ist, wobei aus einem Haltesystem 1, das drei Stromschienen 7 aufweist die jeweiligen Spulen 18 bzw. Spulengruppen eines jeden Statorsegments 13 über dieses Stromschienensystem kontaktiert werden.

Dabei sind die Stromschienen 7 gebogen ausgeführt und folgen dabei im Wesentlichen dem Radius des Stators 22. Jedes Statorsegment 13 kann dabei seine bereits im Haltesystem 1 positionierten Stromschienen 7 aufweisen. Bei der Montage der Statorsegmente 13 zu einem Stator 22 werden dabei im Anschluss auch die jeweiligen Stromscheinen 7 kontaktiert.

Es sind aber auch jeweilige Stromschienenabschnitte möglich, die sich in Umfangsrichtung über zwei, drei oder mehrere Segmente erstrecken. Es sind demnach Viertelkreise oder auch Halbkreis möglich. Die elektrischen Verbindungsleitungen 20 müssen dementsprechend angepasst sein.

Mittels Kontaktelemente 21 erfolgt eine elektrische Kontaktierung zwischen Stromschienenabschnitten einer Phase. Eine derartige elektrische Kontaktierung der Stromschienenabschnitte in Umfangsrichtung kann durch Zusammenstecken, verschweißen, Litzenverbindungen etc. erfolgen.

Durch Lüfter kann nunmehr der kompakte Aufbau durch dementsprechend geführte Luftströme über bzw. durch das Blechpaket 14, als auch im Bereich der Wickelköpfe und der Stromschienen 7 ausreichend gekühlt werden.

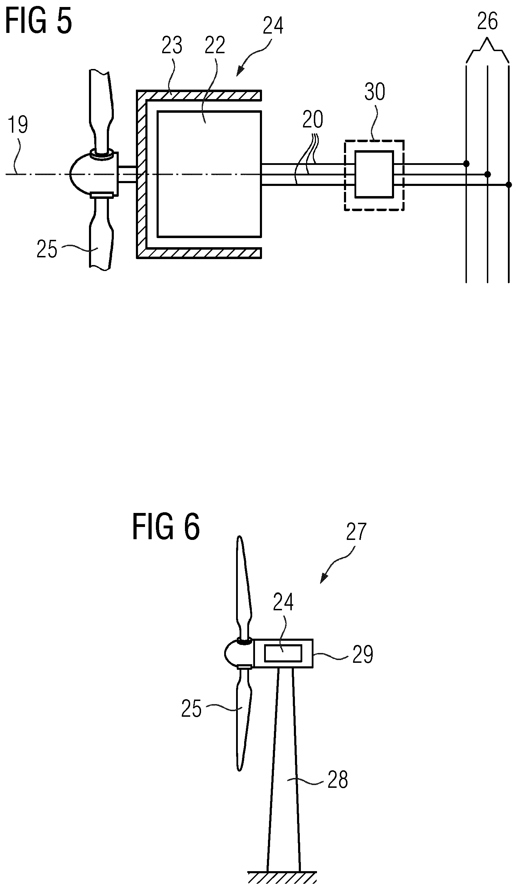

FIG 5 zeigt einer prinzipiellen Anordnung einen direkt angetriebenen Generator 24 einer Windkraftanlage 27, wobei die Drehung des Windrades 25 einen Rotor 23 antreibt, der durch elektromagnetische Wechselwirkung mit einem Wicklungssystem des Stators 22 elektrische Energie erzeugt, die über eine Umrichtereinheit 30 einem Versorgungsnetz 26 zur Verfügung gestellt wird.

Eine derartige Anordnung ist beispielsweise bei Windkraftanlagen 27 gemäß FIG 6 vorzusehen, dabei wird ein Generator 24 in einer Gondel 29 auf einem Turm 28 angeordnet.

## Patentansprüche

1. Haltesystem (1) von Stromschienen (7) mit folgenden Elementen:
einem Grundelement (2), das an einer Stirnseite eines Stators (22) oder Statorsegments (13) einer dynamoelektrischen Maschine (24) befestigbar ist und einer vorgegebenen Anzahl von Fixierelementen (3) mittels derer die Stromschienen (7) am Grundelement (1) fixierbar sind.

2. Stator (22) oder Statorsegment (13) einer dynamoelektrischen Maschine,
- wobei dort in im Wesentlichen axial verlaufenden Nuten eines Blechpaketes (14) ein Wicklungssystem vorgesehen ist, dass an den Stirnseiten Wickelköpfe ausbildet,
- wobei das Blechpaket (14) auf einem Trägersystem (15) angeordnet ist, dass Druckplatten (16) im Bereich der Stirnseite aufweist, die mittels Verbindungselemente (17) fixiert sind,
- wobei ein Haltesystem (1) von Stromschienen (7) nach Anspruch 1 vorgesehen ist, das mit einem Grundelement (2) an einer Stirnseite eines Stators (22) oder Statorsegments (13) der dynamoelektrischen Maschine befestigbar ist und Stromschienen (7) mittels einer vorgegebenen Anzahl von Fixierelementen (3) am Grundelement (1) fixierbar sind.

3. Stator (22) oder Statorsegment (13) einer dynamoelektrischen Maschine, nach Anspruch 2, **dadurch gekennzeichnet, dass** die Stromschienen (7) im Wesentlichen radial unterhalb der Wickelköpfe verlaufen.

4. Stator (22) oder Statorsegment (13) einer dynamoelektrischen Maschine, nach Anspruch 2 oder 3, **dadurch gekennzeichnet , dass** eine Fixierung des Grundelements (2) an der Stirnseite eines Stators (22) oder Statorsegments (13) der dynamoelektrischen Maschine an den Druckplatten (16) und/oder eine Fixierung der Fixierelemente (3) am Grundelement (2) mittels Schrauben erfolgt.

5. Stator (22) oder Statorsegment (13) einer dynamoelektrischen Maschine, nach einem der Ansprüche 2 bis 4, **dadurch gekennzeichnet , dass** zumindest im Bereich der Grundelemente (2) und der Fixierelemente (3) die Stromschienen (7) Isolationselemente (12) aufweisen.

6. Generator (24) einer Windkraftanlage (27) mit einem Stator (22) oder Statorsegmenten (13) nach einem der Ansprüche 2 bis 5.

7. Windkraftanlage (27) mit einem Generator (24) nach Anspruch 6.
